## Europäisches Patentamt

## European Patent Office

## Office européen des brevets

(19)

(11) Veröffentlichungsnummer: **0 148 392**
**B1**

(12)

# EUROPÄISCHE PATENTSCHRIFT

(45) Veröffentlichungstag der Patentschrift:
16.09.87

(21) Anmeldenummer: **84114310.0**

(22) Anmeldetag: **27.11.84**

(51) Int. Cl.⁴: **C 08 G 18/42,** C 08 G 18/08, C 08 G 18/12, C 08 G 18/28, C 09 J 3/16, C 08 J 5/12

(54) **Verwendung von Polyisocyanat-Polyadditionsprodukten als bzw.zur Herstellung von Klebemitteln.**

(30) Priorität: **10.12.83 DE 3344693**

(43) Veröffentlichungstag der Anmeldung:
**17.07.85 Patentblatt 85/29**

(45) Bekanntmachung des Hinweises auf die Patenterteilung:
**16.09.87 Patentblatt 87/38**

(84) Benannte Vertragsstaaten:
**DE FR GB NL**

(56) Entgegenhaltungen:
**EP - A - 0 006 204
EP - A - 0 073 392
BE - A - 717 432
DE - A - 2 624 442
DE - A - 3 139 966
FR - A - 1 498 317
GB - A - 1 191 260
GB - A - 2 104 085**

(73) Patentinhaber: **BAYER AG, Konzernverwaltung RP Patentabteilung, D-5090 Leverkusen 1 Bayerwerk (DE)**

(72) Erfinder: **Henning, Wolfgang, Dr., Zur Linde 27, D-5067 Kürten (DE)**
Erfinder: **Hombach, Rudolf, Dr., Johann-Janssen-Strasse 24, D-5090 Leverkusen (DE)**
Erfinder: **Meckel, Walter, Dr., Zonser-Strasse 9, D-4040 Neuss (DE)**
Erfinder: **Reiff, Helmut, Dr., Walter-Flex-Strasse 16, D-5090 Leverkusen (DE)**

ACTORUM AG

**Beschreibung**

Die vorliegende Erfindung betrifft die Verwendung von wässrigen Lösungen oder Dispersionen von speziellen Polyisocyanat-Polyadditionsprodukten als bzw. zur Herstellung von Klebemitteln insbesondere zur Verklebung von Gummi mit sich selbst oder anderen Materialien.

Wässrige Lösungen oder Dispersionen von Polyisocyanat-Polyadditionsprodukten, d.h. wässrige Lösungen oder Dispersionen von Polyurethanen bzw. Polyurethan-Polyharnstoffen sind bekannt. Ihre Herstellung wird beispielsweise in den folgenden Literaturstellen beschrieben: DE-PS 880 485, DE-AS 1 044 404, US-PS 3 036 998, DE-PS 1 178 586, DE-PS 1 134 946, DE-AS 1 237 306, DE-OS 1 595 602, US-PS 3 756 992, DE-OS 2 019 324, DE-OS 2 035 732, DE-OS 2 446 440, US-PS 3 479 310 und angewandte Chemie 82, 35 (1970).

Die bekannten wässrigen Lösungen oder Dispersionen eignen sich für die verschiedensten Einsatzgebiete, u.a. auch zur Beschichtung bzw. Verklebung beliebiger Substrate. Ein Nachteil der Lösungen bzw. Dispersionen des genannten Standes der Technik ist darin zu sehen, dass sie zum Verkleben von Polymerisaten, insbesondere von Gummi mit sich selbst und anderen Materialien nur bedingt geeignet sind.

Auch die in DE-OS 2 804 603 bzw. EP-A-3521 beschriebenen wässrigen Lösungen oder Dispersionen, die speziell als Klebemittel für Gummi entwickelt worden waren, erfüllen noch nicht alle diesbezüglichen Anforderungen der Praxis.

Es war daher die der Erfindung zugrundeliegende Aufgabe neue Klebemittel für beliebige Substrate, insbesondere für Gummimaterialien zur Verfügung zu stellen, die den bislang eingesetzten Lösungen bzw. Dispersionen des Standes der Technik bezüglich ihrer klebetechnischen Eigenschaften überlegen sind.

Diese Aufgabe konnte überraschenderweise mit den nachstehend näher beschriebenen, erfindungsgemäss zu verwendenden Lösungen oder Dispersionen gelöst werden. Erfindungsgemäss hergestellte Verklebungen, insbesondere von Gummi mit sich selbst oder anderen Materialien weisen Trennfestigkeiten auf, die noch über den Anforderungen der Praxis liegen, so dass oftmals eine Trennung der verklebten Materialien ohne Materialeinriss nicht mehr möglich ist.

Gegenstand der Erfindung ist die Verwendung von wässrigen Lösungen oder Dispersionen von Polyisocyanat-Polyadditionsprodukten mit einem Gehalt von 2 bis 200 Milliäquivalenten pro 100 g Feststoff an chemisch eingebauten ternären oder quaternären Ammoniumgruppen, von 0 bis 25 Gew.-%, bezogen auf Feststoff, an eingebauten, innerhalb von end- und/oder seitenständig angeordneten Polyetherketten vorliegenden Ethylenoxideinheiten, die von 20 bis 95 Gew.-% an Polyestersegmenten Q in über Urethangruppen eingebauter Form aufweisen, wobei

Q für einen Rest steht, wie er durch Entfernung der Hydroxylgruppen aus

i) Dicarbonsäurepolyesterpolyolen des Molekulargewichtsbereichs 700 bis 1400

und/oder

ii) endständige Hydroxylgruppen aufweisenden Homo- oder Mischpolymerisaten des Molekulargewichtsbereichs 700 bis 2500 von Lactonen erhalten wird,

als Klebemittel oder zur Herstellung von Klebemitteln für beliebige Substrate.

Erfindungswesentlich ist die Verwendung von solchen, als Lösung oder Dispersion vorliegenden Polyurethanen, die kationisch, d.h. durch Einbau von Ammoniumgruppen modifiziert sind, und die eingebaute Polyestersegmente auf Basis von Dicarbonsäurepolyesterpolyolen des ausgewählten Molekulargewichtsbereichs von 700-1400 oder auf Basis von Polylactonen des Molekulargewichtsbereichs 700-2500 aufweisen. Bei Beachtung dieser Auswahlkriterien wird eine sprunghafte Verbesserung der klebetechnischen Eigenschaften beobachtet.

Die GB-A-2 104 085 beschreibt zwar bereits die Herstellung von stabilen, wässrigen Dispersionen von Polyurethanen, die u.a. als Klebemittel verwendbar sind. Es kann dennoch gesagt werden, dass diese Vorveröffentlichung keinerlei Hinweis auf die erfindungswesentlichen Auswahlkriterien vermittelt. So wird in der Beschreibung lediglich ausgeführt, dass die Polyhydroxylverbindungen ein Molekulargewicht innerhalb des breiten Bereichs von 300-6000, vorzugsweise von 300-3000 aufweisen sollen. Bezüglich der ionischen Modifizierung wird in der Beschreibung sowohl der Einbau von anionischen als auch von kationischen Zentren erwähnt. In den Ausführungsbeispielen erfolgt vorzugsweise eine anionische Modifizierung. In keinem Ausführungsbeispiel werden Polyurethane beschrieben, deren Polyesterkomponente den erfindungswesentlichen Aufbaukomponenten bezüglich des Molekulargewichts entsprechen, und die gleichzeitig kationisch modifiziert sind. Die Verwendbarkeit der Dispersionen gemäss Vorveröffentlichung als Klebstoff wird nur beiläufig unter vielen anderen Verwendungsmöglichkeiten erwähnt. Aus all dem kann der Fachmann keinerlei richtungsweisenden Hinweis bezüglich der erfindungsgemäss zu treffenden Auswahlkriterien entnehmen.

Für die Herstellung der erfindungsgemäss zu verwendenden Polyuretane geeignete Aufbaukomponenten sind a) organische Polyisocyanate, d.h. beliebige organische Verbindungen, die mindestens zwei freie Isocyanatgruppen aufweisen. Vorzugsweise werden Diisocyanate $X(NCO)_2$ eingesetzt, wobei X einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethylcyclohexan, 4,4'-Diisocyanatodicyclohexyl-methyl, 4,4'-Diisocyanato-dicyclohexylpropan-(2,2), 1,4-Diisocyanatobenzol, 2,4-Diisocyanatotoluol, 2,6-Diisocyanatotoluol, 4,4'-Diisocyanato-diphenylmethan, p-Xylylen-diisocynat, sowie aus diesen Verbindungen bestehende Gemische.

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig (mit)zuverwenden.

Gegebenenfalls können bei der Herstellung der Polyadditionsprodukte auch Monoisocyanate wie z.B. Phenylisocyanat, Hexylisocyanat oder Dodecylisocyanat in untergeordneten, d.h. in bis zu 10 NCO-Äquivalent-% liegenden Mengen mitverwendet werden, wobei jedoch durch gleichzeitige Mitverwendung von höher als difunktionellen Aufbaukomponenten ein vorzeitiger Kettenabbruch verhindert werden muss.

Reaktionspartner für die Polyisocyanate a) sind b) organische Polyhydroxylverbindungen des Molekulargewichtsbereichs 500 bis 5000, gegebenenfalls c) organische Polyhydroxylverbindungen des Molekulargewichtsbereichs 62 bis 499, gegebenenfalls d) innerhalb von Polyetherketten eingebaute Ethylenoxideinheiten aufweisende einwertige Alkohole des Molekulargewichtsbereichs 800 bis 10 000 und e) aminische oder hydrazinische Kettenverlängerungsmittel.

Bei den organischen Polyhydroxylverbindungen b) des Molekulargewichtsbereichs 500 bis 5000 handelt es sich um b1) Polyesterpolyole des genannten Molekulargewichtsbereichs und gegebenenfalls um b2) andere Polyole des genannten Molekulargewichtsbereichs der aus der Polyurethanchemie an sich bekannten Art. Wesentlich ist hierbei, dass die Polyesterpolyole b1) bei der Durchführung des erfindungsgemässen Verfahrens in solchen Mengen mitverwendet werden und so zusammengesetzt sind, dass letztendlich in den erhaltenen Polyisocyanat-Polyadditionsprodukten 20 bis 95, vorzugsweise 25 bis 80 Gew.-% an über Urethangruppen eingebauten Polyestersegmenten Q der vorstehend genannten Art vorliegen. Dies bedeutet, dass es von entscheidender Bedeutung ist, dass sich die Polyesterpolyole b1) zu mindestens 50, vorzugsweise zu mindestens 80 Hydroxyläquivalent-% aus Dicarbonsäurepolyesterpolyolen, insbesondere Dicarbonsäurepolyesterdiolen des Molekulargewichtsbereichs 700 bis 1400 und/oder aus, endständige Hydroxylgruppen aufweisenden Homo- oder Mischpolymerisaten von Lactonen des Molekulargewichtsbereichs 700 bis 2500 zusammensetzen und dass die Gesamtmenge der Komponente b1) so bemessen wird, dass der erfindungswesentliche Gehalt an erfindungswesentlichen Struktureinheiten Q resultiert.

Bei den genannten Dicarbonsäurepolyesterpolyolen, insbesondere -diolen handelt es sich im übrigen vorzugsweise um solche, deren Dicarbonsäure-Komponente zu mindestens 50 Carboxyläquivalent-%, besonders bevorzugt ausschliesslich aus Adipinsäure und deren Polyol-Komponente vorzugsweise zu mindestens 50 Hydroxyläquivalent-%, besonders bevorzugt ausschliesslich aus 1,6-Dihydroxy-hexan bestehen. Neben diesen bevorzugten Aufbaukomponenten können die erfindungswesentlichen Polyesterpolyole auch noch andere Aufbaukomponenten der nachstehend beispielhaft genannten Art enthalten. Bei den Homo- oder Mischpolymerisaten von Lactonen handelt es sich vorzugsweise um difunktionelle, endständige Hydroxylgruppen aufweisende Anlagerungsprodukte von Lactonen bzw. Lactongemischen wie z.B. ε-Caprolacton, β-Propiolacton, γ-Butyrolacton und/oder Methyl-ε-caprolacton an geeignete difunktionelle Startermoleküle wie z.B. die nachstehend als Aufbaukompomente für die Polyesterpolyole genannten niedermolekularen, zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt werden. Wesentlich für die Eignung der Lactonpolymerisate ist, dass sie zu mindestens 50 Gew.-% aus polymerisierten Lactonen bzw. polykondensierten, den Lactonen entsprechenden $\omega$-Hydroxycarbonsäuren bestehen. Aus der letzten Feststellung geht bereits hervor, dass selbstverständlich anstelle der Polymerisate von Lactonen auch die entsprechenden, chemisch völlig äquivalenten Polykondensate der den Lactonen entsprechenden Hydroxycarbonsäuren eingesetzt werden können.

Die Komponente b1) kann neben diesen erfindungswesentlichen Polyesterpolyolen auch noch andere Polyesterpolyole des Molekulargewichtsbereichs 500 bis 5000 der aus der Polyurethanchemie an sich bekannten Art enthalten. Es handelt sich hierbei um die an sich bekannten Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester, Terephthalsäure-bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, Cyclohexandimethanol (1,4-Bishydroxymethylcyclohexan), 2-Methyl-1,3-propandiol, Glycerin, Trimethylolpropan, Hexantriol-(1,2,6), Butantriol-(1,2,4), Trimethylolethan, ferner Diethylenglykol, Triethylenglykol, Tetraethylenglykol, Polyethylenglykol, Dipropylenglykol, Polypropylenglykol, Dibutylenglykol und Polybutylenglykole in Frage. Die Polyester können anteilig endständige Carboxylgruppen aufweisen. Auch Polyester aus Lactonen die bezüglich ihres Molekulargewichts den erfindungsgemässen Verbindungen nicht entsprechen, z.B. aus ε-Caprolacton oder Hydroxycarbonsäuren, wie z.B. ω-Hydroxycapronsäure, sind einsetzbar.

Auch Hydroxylgruppen aufweisende Polycarbonate kommen als Bestandteil der Polyesterpolyol-Komponente b1) in Betracht, z.B. solche, die durch Umsetzung von Diolen wie Propandiol-(1,3), Butandiol-(1,4) und/oder Hexandiol-(1,6), Diethylenglykol, Triethylenglykol, Tetraethylenglykol mit Diarylcarbonaten, z.B. Diphenylcarbonat oder Phosgen, hergestellt werden können.

Die Komponente b) kann neben den beispielhaft genannten Ausgangsmaterialien b1) gegebenenfalls weitere, Hydroxylgruppen aufweisende Verbindungen b2) des Molekulargewichtsbereichs 500 bis 5000 enthalten. Beispielsweise kommen als weitere Hydroxylgruppen aufweisende Verbindungen b2) die aus der Polyurethanchemie an sich bekannten Polyetherpolyole, insbesondere -diole in Betracht, wie sie beispielsweise durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von BF$_3$ oder durch Anlagerung dieser Epoxide, gegebenenfalls im Gemisch oder nacheinander, an Startkomponenten mit reaktionsfähigen Wasserstoffstomen wie Alkohole und Amine, z.B. Wasser, Ethylenglykol, Propylenglykol-(1,3) oder -(1,2), 4,4'-Dihydroxy-diphenylpropan, Anilin, hergestellt werden können. Auch organische Dihydroxyverbindungen mit innerhalb von seitenständig angeordneten Polyetherketten eingebauten Ethylenoxideinheiten der nachstehend genannten Art können als Aufbaukomponenten b2) bei der Durchführung des erfindungsgemässen Verfahrens mit mitverwendet werden, um in die Verfahrensprodukte hydrophile, seitenständige Polyetherketten einzubauen.

Weiterhin können bei der Herstellung der erfindungsgemäss zu verwendenden Polyurethane gegebenenfalls Aufbaukomponenten c) mitverwendet werden. Hierbei handelt es sich um organische vorzugsweise 2- und/oder 3wertige und insbesondere 2wertige Polyhydroxylverbindungen des Molekulargewichtsbereichs 62 bis 499, vorzugsweise 62 bis 250. Diese Verbindungen werden im allgemeinen in einer Menge von 0 bis 60 Hydroxyläquivalent-%, bezogen auf die Gesamtmenge der Komponenten b) und c) mitverwendet. Es handelt sich bei diesen Aufbaukomponenten c) entweder um stickstofffreie, gegebenenfalls Ether- oder Estergruppen aufweisende Polyole oder um mindestens zwei Hydroxylgruppen aufweisende Aminoalkohole mit tertiären Aminstickstoffatomen, deren tertiäre Stickstoffatome während oder nach Beendigung der Isocyanat-Polyadditionsreaktion durch Neutralisation oder Quaternierung zumindest teilweise in ternäre bzw. quaternäre Ammoniumgruppen überführt werden können. Zu den erstgenannten Vertretern der Aufbaukomponenten c) gehören beispielsweise einfache, mehrwertige Alkohole wie Ethylenglykol, Propylenglykol, Propandiol-(1,3), Butandiol-1,4, Hexandiol-1,6, Trimethylolpropan oder Gylcerin.

Auch niedermolekulare Polyesterdiole wie z.B. Adipinsäure-bis-(hydroxyethyl)-ester oder niedermolekulare, Thergruppen aufweisende Diole wie z.B. Diethylenglykol, Triethylenglykol, Tetraethylenglykol, Dipropylenglykol, Tripropylenglykol oder Tetrapropylenglykol können als stickstofffreie Aufbaukomponente c) mitverwendet werden. Zu den geeigneten Aminoalkoholen gehören beispielsweise Verbindungen wie N-Methyl-diethanolamin, N-Methyl-diisopropanolamin, N-Ethyl-diethanolamin, N-Ethyldiisopropanolamin oder N,N'-Bis-(2-hydroxyethyl)-perhydropyrazin.

Weiterhin können bei der Herstellung der erfindungsgemäss zu verwendenden Polyurethane gegebenenfalls Aufbaukomponenten d) mitverwendet werden. Hierbei handelt es sich um einwertige Polyetheralkohole des Molekulargewichtsbereichs 800 bis 10 000, vorzugsweise 1000 bis 5000, die durch Alkoxylierung von einwertigen Startermolekülen wie beispielsweise Methanol, Ethanol oder n-Butanol erhältlich sind, wobei als Alkoxylierungsmittel Ethylenoxid oder Gemische von Ethylenoxid mit anderen Alkylenoxiden wie insbesondere Propylenoxid eingesetzt werden. Im Falle der Verwendung von Alkylenoxidgemischen enthalten diese jedoch mindestens 40, vorzugsweise mindestens 65 Mol-% an Ethylenoxid. Die gegebenenfalls erfolgende Mitverwendung von derartigen Aufbaukomponenten d) erfolgt, um in die erfindungsgemässen Verfahrensprodukte endständig hydrophile, innerhalb von Polyetherketten eingebaute Ethylenoxid-Einheiten einzubauen.

Bei der bei der Herstellung der Polyurethane einzusetzenden Aufbaukomponente e) handelt es sich um aminische oder hydrazinische Kettenverlängerungsmittel bzw. Vernetzer des Molekulargewichtsbereichs 32-500, vorzugsweise 60 bis 300. Auch zu dieser Gruppe gehören sowohl tert. Aminogruppen, d.h. potentielle ternäre bzw. quaternäre Ammoniumgruppen aufweisende Verbindungen als auch Polyamine, die keine tert. Aminogruppen aufweisen. Zu der erstgenannten Gruppe gehören beispielsweise Verbindungen wie N-Methyl-bis-(3-aminopropyl)-amin, N-Methyl-bis-(2-aminoethyl)-amin oder N,N',N''-Trimethyl-diethylentriamin. Aminische bzw. hydrazinische Kettenverlängerungsmittel, die keine tert. Aminogruppen aufweisen sind beispielsweise Ethylendiamin, Hexamethylendiamin, Piperazin, 2,5-Dimethylpiperazin, 1-Amino-3-aminomethyl-3,5,5-trimethyl-cyclohexan (Isophorondiamin, IPDA), 4,4'-Diaminodicyclohexylmethan, 1,4-Diamino-cyclohexan, 1,2-Diamino-propan, Hydrazin, Hydrazinhydrat, Aminosäurehydrazide wie z.B. 2-Aminoessigsäure-hydrazid oder Bis-Hydrazide wie z.B. Bernsteinsäure-bis-hydrazid.

Insbesondere die aminischen bzw. hydrazinischen Kettenverlängerungsmittel, die keinen tert. Stickstoff aufweisen, können auch in blockierter Form, d.h. in Form der entsprechenden Ketimine (DE-OS 2 725 589), Ketazine (DE-OS 2 811 148), US-PS 4 269 748) oder Aminsalze (US-PS 4 292 226) zum Einsatz gelangen. Auch Oxazolidine, wie sie beispielsweise gemäss DE-OS 2 732 131 bzw. US-PS 4 192 937 zum Einsatz gelangen, stellen verkappte Diamine dar, die beim erfindungsgemässen Verfahren in Analogie zu den genannten Vorveröffentlichungen zur Kettenverlängerung der NCO-Prepolymeren eingesetzt werden können. Bei der Verwendung derartiger verkappter Diamine werden diese im allgemeinen mit den NCO-Prepolymeren in Abwesenheit von Wasser vermischt und diese Mischung anschliessend mit dem Dispersionswasser oder einem Teil des Dispersionswassers vermischt, so dass intermediär hydrolytisch die entsprechenden Diamine freigesetzt werden.

Weitere Vertreter von als Aufbaukomponenten a), b) oder c) einzusetzenden Verbindungen sind z.B. in High Polymers, Vol. XVI, «Polyurethanes, Chemistry and Technology», verfasst von Saunders-Frisch, Interscience Publishers, New York, London, Band I, 1962, Seiten 32 bis 42 und Seiten 44 bis 54 und Band II, 1964, Seiten 5 bis 6 und 198 bis 199, sowie im Kunststoff-Handbuch, Band VII, Vieweg-Höchtlen, Carl-Hanser-Verlag, München, 1966, z.B. auf den Seiten 45 bis 71, beschrieben.

Die Mitverwendung von im Sinne der Isocyanat-Polyadditionsreaktion tri- oder höherfunktionellen Verbindungen in geringen Anteilen zur Erzielung eines gewissen Verzweigungsgrades ist ebenso möglich wie die bereits erwähnte mögliche Mitverwendung von tri- oder höherfunktionellen Polyisocyanaten zum gleichen Zweck. Auch einwertige Alkohole wie z.B. n-Butanol oder n-Dodecanol und Stearylalkohol können in geringen Mengen mitverwendet werden.

Der Einbau von ionischen Gruppen, d.h. der ternären bzw. quaternären Ammoniumgruppen in die erfindungsgemäss zu verwendenden Polyurethane erfolgt vorzugsweise unter Mitverwendung von tert. Aminogruppen aufweisenden Aufbaukomponenten c) und/oder e) unter anschliessender Überführung der tert. Aminogruppen in die entsprechenden Ammoniumgruppen durch Neutralisation mit anorganischen oder organischen Säuren wie z.B. Salzsäure, Essigsäure, Fumarsäure, Maleinsäure, Milchsäure, Weinsäure, Oxalsäure oder Phosphorsäure oder durch Quaternierung mit geeigneten Quaternierungsmitteln wie z.B. Methylchlorid, Methyljodid, Dimethylsulfat, Benzylchlorid, Chloressigsäureethylester oder Bromacetamid. Grundsätzlich kann diese Neutralisation oder Quaternierung der tert. Stickstoff aufweisenden Aufbaukomponenten auch vor oder während der Isocyanat-Polyadditionsreaktion erfolgen, obwohl dies weniger bevorzugt ist. Es ist auch möglich ternäre bzw. quaternäre Ammoniumgruppen in die Polyisocyanat-Polyadditionsprodukte über tert. Aminogruppen aufweisende, als Aufbaukomponente b2) eingesetzte Polyetherpolyole unter anschliessender Neutralisation bzw. Quaternierung der tert. Aminogruppen einzuführen. Auch dies ist jedoch keine bevorzugte Ausführungsform des erfindungsgemässen Verfahrens.

Bei allen Varianten der Herstellung der erfindungsgemäss zu verwendenden Polyurethane werden die Menge der tert. Aminogruppen bzw. Ammoniumgruppen aufweisenden Aufbaukomponenten bzw. der Neutralisations- oder Quaternierungsgrad so gewählt, dass in den erfindungsgemässen Verfahrensprodukten 2 bis 200, vorzugsweise 2 bis 100 und besonders bevorzugt 5 bis 50 Milliäquivalente pro 100 g Feststoff an ternären bzw. quaternären Ammoniumgruppen vorliegen.

Neben derartigen Ammoniumgruppen können in den erfindungsgemäss zu verwendenden Polyurethanen auch innerhalb von end- und/oder seitenständig angeordneten Polyetherketten vorliegende Ethylenoxideinheiten als weitere hydrophile Struktureinheiten vorliegen. Die Einführung von seitenständigen hydrophilen Polyetherketten erfolgt vorzugsweise durch Mitverwendung von Aufbaukomponenten b2) des Molekulargewichtsbereichs 500 bis 5000, vorzugsweise 1000 bis 3000 mit seitenständigen, zumindest zu 40, vorzugsweise zumindest zu 65 Mol-% aus Ethylenoxideinheiten (insbesondere neben Propylenoxideinheiten) bestehen. Beispiele derartiger hydrophiler Aufbaukomponenten sind in US-PS 3 905 929, US-PS 4 092 286 oder US-PS 4 190 566 beschrieben. Grundsätzlich ist es auch möglich, derartige seitenständige, hydrophile Gruppierungen über entsprechend modifizierte Diisocyanate einzuführen, wie dies beispielsweise in US-PS 3 920 598 beschrieben ist, jedoch ist eine dartige Arbeitsweise weniger bevorzugt. Endständige, hydrophil modifizierte Polyetherketten werden beim erfindungsgemässen Verfahren vorzugsweise unter Mitverwendung der oben unter d) genannten Ausgangsmaterialien eingeführt, wie dies beispielsweise auch in US-PS 4 237 264 oder US-PS 4 238 378 beschrieben ist. Die Verwendung der in diesen Vorveröffentlichungen ebenfalls beschriebenen hydrophilen Monoisocyanate [in Abmischung mit der Komponente a)] wäre zwar prinzipiell ebenfalls möglich, ist jedoch keinesfalls bevorzugt.

Die Verbindungen der beipielhaft genannten Art mit innerhalb von end- und/oder seitenständig angeordneten Polyetherketten vorliegenden Ethylenoxideinheiten werden, falls überhaupt, in solchem Mengen eingesetzt, dass in den Polyurethanen von 0 bis 25, vorzugsweise 0,5 bis 10 Gew.-% an innerhalb von end und/oder seitenständig angeordneten Polyetherketten eingebauten Ethylenoxideinheiten vorliegen. Die Gesamtmenge der hydrophilen Struktureinheiten (Ammoniumgruppen und Ethylenoxideinheiten der zuletzt genannten Art) muss jedoch stets so gewählt werden, dass die Löslichkeit bzw. Dispergierbarkeit der Polyurethane in Wasser gewährleistet ist. Bei der Herstellung der Polyurethane wird vorzugsweise so vorgegangen, dass zunächst aus den Ausgangskomponenten a), b), gegebenenfalls c) in der Schmelze oder in Gegenwart eines inerten Lösungsmittels wie z.B. Aceton oder N-Methylpyrrolidon ein freies Isocyanatgruppen aufweisendes Prepolymer hergestellt wird, wozu die genannten Ausgangsmaterialien unter Einhaltung eines NCO/OH-Äquivalentverhältnisses von 1,2:1 bis 2,5:1 vorzugsweise 1,2:1 bis 2:1 zur Umsetzung gebracht werden. Die Reaktionstemperatur liegt hierbei im allgemeinen bei 5 bis 160°C, vorzugsweise bei 50-100°C.

Im Anschluss hieran werden die so erhaltenen NCO-Prepolymeren durch Umsetzung mit der Komponente e), d.h. den aminischen bzw. hydrazinischen Kettenverlängerungsmitteln und gegebenenfalls Wasser in die hochmolekularen Produkte überführt. Hierbei wird die Komponente e), d.h. das aminische oder hydrazinische Kettenverlängerungsmittel in einer solchen Menge eingesetzt, die einem NCO/NH-Äquivalentverhältnis, bezogen auf Isocyanatgruppen der Prepolymeren einerseits und reaktionsfähigen primären oder sekundären Aminogruppen der Kettenverlängerungsmittel andererseits, von 0,8:1 bis 2,5:1, vorzugsweise 0,8:1 bis 2:1 entspricht. Diese Kettenverlängerungsreaktion kann nach mehreren unterschiedlichen Varianten durchgeführt werden. So ist es beispielsweise möglich, die Umsetzung der NCO-Prepolymeren mit der Komponente e) in einem inerten Lösungsmittel wie z.B. Aceton oder N-Methylpyrrolidon durchzuführen und die so erhaltene organische Lösung mit dem Dispersionswasser, gegebenenfalls unter anschliessender destillativer Entfernung des Lösungsmittels zu durchmischen. Gemäss einer weiteren Variante wäre es beispielsweise möglich, die NCO-Prepolymeren mit blockierten Kettenverlängerungsmitteln e) der oben beispielhaft genannten Art zu vermischen und dieses Gemisch anschliessend in Wasser zu dispergieren. Die Einführung der Ammoniumgruppen könnte bei der erstgenannten Variante beispielsweise durch Neutralisation oder Quaternierung der tert. Aminogruppen vor der Durchmischung mit dem Wasser oder durch Verwendung einer wässrigen Lösung der als Neutralisationsmittel dienenden Säure erfolgen. Gemäss der zweiten Variante ist es beispielsweise möglich, die zur Neutralisation der tert. Aminogruppen erforderliche Säure dem Dispersionswasser zuzumischen. Grundsätzlich ist es jedoch auch denkbar, in den NCO-Prepolymeren vorliegende tert. Aminogruppen vor der Umsetzung mit dem Kettenverlängerungsmittel e) bereits durch Quaternierung bzw. Neutralisation zumindest teilweise in Ammoniumgruppen zu überführen oder aber, allerdings weniger bevorzugt, bereits Ammoniumgruppen aufweisende Aufbaukomponenten bei der Herstellung der NCO-Prepolymeren einzusetzen.

Die Kettenverlängerungsreaktion, d.h. die Umsetzung der NCO-Prepolymeren mit der Komponente e) und die Dispergierung in Wasser erfolgt im allgemeinen innerhalb des Temperaturbereichs von 20-100°C, vorzugsweise 20 bis 80°C.

Die Menge des Dispersionswassers wird im allgemeinen so bemessen, dass 10- bis 60-, vorzugsweise 20- bis 50-gew.-%ige Lösungen bzw. Dispersionen der Polyisocyanat-Polyadditionsprodukte resultieren.

Die erfindungsgemäss zu verwendenden Lösungen bzw. Dispersionen sind durch den bereits genannten Gehalt des gelösten bzw. dispergierten Feststoffs an ternären bzw. quaternären Ammoniumgruppen und insbesondere durch den bereits genannten Gehalt an erfindungswesentlichen Polyestersegmenten charakterisiert. Diese erfindungswesentlichen Polyestersegmente resultieren aus der erfindungswesentlichen Mitverwendung von Dicarbonsäurepolyesterpolyolen des Molekulargewichtsbereichs 700-1400 und/oder von Homo- oder Mischpolymerisaten von Lactonen der oben beispielhaft genannten Art. Diese erfindungswesentlichen Aufbaukomponenten können mit der Formel $Q(OH)_n$ beschrieben werden, wobei Q für einen Polyesterrest steht, wie er durch Entfernung der Hydroxylgruppen aus einem Polyesterpolyol der genannten Art erhalten wird, und wobei n für eine ganze oder (im statistischen Mittel) gebrochene Zahl von 2 bis 3, vorzugsweise für 2 steht. Im Falle des Vorliegens von eingebauten Homo- oder Mischpolymerisaten von Lactonen besteht der Rest Q zu mindestens 50 Gew.-% aus einpolymerisierten Lactoneinheiten, insbesondere einpolymerisierten, durch Polymerisation von ε-Caprolacton resultierenden Lactoneinheiten $-O-X-CO-$, wobei X für den indifferenten Kohlenwasserstoffrest des jeweiligen Lactons steht. Die erfindungsgemäss als Lösungen oder Dispersionen vorliegenden Polyisocyanat-Polyadditionsprodukte enthalten im allgemeinen von 20 bis 95, vorzugsweise von 25 bis 80 Gew.-% derartiger Reste Q.

Grundsätzlich ist es auch möglich, erfindungsgemässe wässrige Lösungen oder Dispersionen von Polyisocyanat-Polyadditionsprodukten nach dem sogenannten Schmelzdispergierverfahren gemäss US-PS 3 756 992 oder auch gemäss der Verfahrensweise der DE-OS 2 543 091 herzustellen, wobei durch geeignete Auswahl der Art und Mengenverhältnisse der eingesetzten Ausgangsmaterialien lediglich darauf zu achten ist, dass die resultierenden Polyisocyanat-Polyadditionsprodukte den genannten Bedingungen bezüglich des Gehalts an Ammoniumgruppen und an erfindungswesentlichen Polyester-Segmenten entsprechen.

Die erfindungsgemässen Lösungen oder Dispersionen von Polyisocyanat-Polyadditionsprodukten können als solche unmittelbar zum Verkleben beliebiger Substrate verwendet werden. Zur Erzielung spezieller Eigenschaften können die erfindungsgemässen Dispersionen mit anderen Dispersionen, wie z.B. Polyvinylacetat-Dispersionen abgemischt werden. Weiter können Zusatzstoffe, wie z.B. synthetische oder natürliche Harze, Weichmacher und Füllstoffe zugesetzt werden.

Sie eignen sich insbesondere zur Herstellung von Verklebungen von Gummi mit sich selbst oder anderen Materialien. Die Verarbeitung der erfindungsgemässen Verfahrensprodukte bei der erfindungsgemässen Verwendung erfolgt nach den an sich bekannten Methoden der Klebetechnologie bei Verarbeitung von wässrigen Dispersions- bzw. Lösungsklebstoffen.

In den nachfolgenden Beispielen beziehen sich alle Prozentangaben auf Gewichtsprozente.

Die Prüfung der Dispersionen bezüglich ihrer klebetechnischen Eigenschaften erfolgte nach DIN 53 273 auf jeweils dem gleichen Styrol-Butadien Gummisohlenmaterial der Shore-A-Härte 90 (Nora-Testmaterial der Fa. Freudenberg, Weinheim).

Zur Prüfung der Klebstoffe wurden aus den Testmaterialien Prüfkörper hergestellt. Vor dem Aufbringen des Klebstoffes wurde das Gummimaterial mit Schleifpapier der Körnung 40 gründlich gerauht. Der Klebstoffauftrag erfolgte beidseitig zweimal, so dass auf jeder Seite ca. 50 g/m², bezogen auf Feststoff, des Klebstoffs vorlagen. Anschliessend wurden die Klebschichten 4 Minuten mit 250 Watt-Infrarotlampen in einer Entfernung von 25 cm bestrahlt, dann die Klebung zusammengelegt und 5 Minuten bei 0,35 MPa gepresst. Nach dem Kleben wurden die Prüfkörper zunächst 5 Tage bei 23°C gelagert. Der im Trennversuch bei einem Spindelvorschub von 100 mm/min nach DIN 53 273 bei 23°C ermittelte Schälwiderstand sind in nachfolgender Tabelle aufgeführt.

*Beispiel 1*

Ansatz:

| | | | |
|---|---|---|---|
| A | 300 | g | Adipinsäure-Hexandiol-Polyester (Molekulargewicht: 840) |
| | 17,5 | g | eines auf Butanol gestarteten Polypropylenoxidpolyethylenoxid-polyethers (Mol-Verh.: Propylenoxid:Ethylenoxid = 17:83; Molekulargewicht: 2150) |
| | 0,33 | g | Trimethylolpropan |
| | 72,9 | g | Hexamethylendiisocyanat |
| | 96,3 | g | Isophorondiisocynat (IPDI) |
| | 19,3 | g | Butandiol-1,4 |
| | 1080 | g | Aceton |
| | 4,66 | g | Hydrazinhydrat |
| | 27,04 | g | N-Methyl-bis(3-aminoproypl)-amin in 50 g Aceton |
| | 13,42 | g | DL-Milchsäure in 30 g Wasser |
| | 1260 | g | entsalztes Wasser |

Durchführung:

Die Komponente A wird 30 Minuten bei 120°C unter Rühren im Vakuum entwässert. Bei 80°C werden die Polyisocyanate zugegeben. Nach 1 Stunde Reaktionsdauer bei 80°C wird mit Butandiol-1,4 versetzt und bei 95 bis 100°C bis zu einem konstanten NCO-Wert von 4,6% verrührt.

In die heisse Schmelze wird anschliessend das Aceton zugetropft, wobei mit Hilfe eines Kühlers für ausreichenden Rückfluss gesorgt wird. Die klare acetonische Lösung wird auf 50°C abgekühlt und es wird mit Hydrazinhydrat und in 5minütigem Abstand mit N-Methyl-bis(3-aminopropyl)amin verlängert. Nach 5 Minuten wird bei 50°C mit DL-Milchsäure versalzt und nach weiteren 5 Minuten mit Wasser dispergiert. Anschliessend wird das Aceton destillativ entfernt. Man erhält eine feinteilige, sedimentationsstabile Dispersion mit einer Viskosität von 31,7 sek. (Ford-Becher 4 mm Düse) bei einem Feststoff von 30%.

*Beispiel 2*

Ansatz:

| | | | |
|---|---|---|---|
| A | 100 | g | Adipinsäure-Hexandiol-Polyester (Molekulargewicht: 840) |
| | 133,9 | g | Adipinsäure-Butandiol-Polyester (Molekulargewicht: 2250) |
| | 11,5 | g | eines auf Butanol gestarteten Polypropylenoxidpolyethylenoxidpolyethers (Mol. Verh.: Propylenoxid:Ethylenoxid = 17:83; Molekulargewicht: 2150) |
| | 0,17 | g | Trimethylolpropan |
| | 36,5 | g | Hexamethylendiisocyanat |
| | 48,3 | g | Isophorondiisocyanat |
| | 9,6 | g | Butandiol-1,4 |
| | 1000 | g | Aceton |
| | 2,1 | g | Hydrazinhydrat |

| | | | |
|---|---|---|---|
| | 12,01 | g | N-Methyl-bis-(3-aminopropyl)-amin in 50 g Aceton |
| | 4,47 | g | DL-Milchsäure in 30 g Wasser |
| | 810 | g | entsalztes Wasser |

Durchführung:

Vgl. Beispiel 1 (der konstante NCO-Wert stellt sich bei 3,1% ein)

Es entsteht eine feinteilige Dispersion mit einem Feststoffgehalt von 32,7% und einer Fordbecherviskosität (4 mm Düse) von 13 sek.

*Beispiel 3*

Ansatz:

| | | | |
|---|---|---|---|
| A | 150 | g | Adipinsäure-Hexandiol-Polyester (Molekulargewicht: 840) |
| | 0,165 | g | Trimethylolpropan |
| | 36,5 | g | Hexamethylendiisocyanat |
| | 48,2 | g | Isophorondiisocyanat |
| | 9,63 | g | Butandiol-1,4 |
| | 540 | ml | Aceton |
| | 2,32 | g | Hydrazinhydrat |
| | 13,4 | g | N-Methyl-bis-(3-aminopropyl)-amin in 25 g Aceton |
| | 5,0 | g | DL-Milchsäure in 15 g Wasser |
| | 600 | g | entsalztes Wasser |

Durchführung:

Vgl. Beispiel 1 (der konstante NCO-Wert stellt sich bei 4,8% ein)

Es entsteht eine feinteilige Dispersion mit einem Feststoff von 37% und einer Fordbecherviskosität (4 mm Düse) von 15 sek.

*Beispiel 4*

Ansatz:

| | | | |
|---|---|---|---|
| A | 240 | g | Adipinsäure-Hexandiol-Polyester (Molekulargewicht: 840) |
| | 8,75 | g | eines auf Butanol gestarteten Polypropylenoxidpolyethylenoxid-polyethers (Mol-Verh.: Propylenoxid:Ethylenoxid = 17:83; Molekulargewicht: 2150) |
| | 0,17 | g | Trimethylolpropan |
| | 36,5 | g | Hexamethylendiisocyanat |
| | 48,17 | g | Isophorondiisocyanat |
| | 1000 | ml | Aceton |
| | 2,22 | g | Hydrazinhydrat |
| | 12,86 | g | N-Methyl-tris-(3-aminopropyl)-amin in 50 g Aceton |
| | 4,78 | g | DL-Milchsäure in 20 g Wasser |
| | 810 | g | Wasser |

Durchführung:

Vgl. Beispiel 1 (Zugabe von Butandiol-1,4 entfällt). Der konstante NCO-Wert stellt sich bei 3,35% ein

Es entsteht eine feinteilige Dispersion mit einem Feststoffgehalt von 32,4% und einer Fordbecherviskosität (4 mm Düse) von 13,1 sek.

*Beispiel 5*

Ansatz:

A
- 300 g Adipinsäure-Hexandiol-Polyester (Molekulargewicht: 840)
- 17,5 g eines auf Butanol gestarteten Polypropylenoxidpolypropylenoxid-polyethers (Mol-Verh.: Propylenoxid:Ethylenoxid = 17:83; Molekulargewicht: 2150)
- 0,33 g Trimethylolpropan

| a | | b | | c | | |
|---|---|---|---|---|---|---|
| 359 | g | 360 | g | 635 | g | acetonisches Prepolymer |
| 1,1 | g | 1,1 | g | 1,95 | g | Hydrazinhydrat |
| 6,38 | g | 6,38 | g | 11,28 | g | N-Methyl-bis-(3-aminopropyl)-amin |
| 30 | g | 30 | g | 50 | g | Aceton |
| 3,96 | g | — | | — | | Weinsäure |
| — | | 3,33 | g | — | | Oxalsäure |
| — | | — | | 4,58 | g | Phosphorsäure in 20 g Wasser |
| 330 | g | 330 | g | 580 | g | Wasser |

Man erhält jeweils feinteilige Dispersionen mit einem Feststoff von:
a = 32,48%,
b = 31,43%,
c = 31,57%.

72,9 g Hexamethylendiisocyanat
96,3 g Isophorondiisocyanat
19,3 g Butandiol-1,4
900 g Aceton

Durchführung:

Die acetonische Lösung des Prepolymeren (konstanter NCO-Wert = 4,8%) wird wie in Beispiel 1 beschrieben hergestellt und anschliessend in 3 Teile aufgeteilt. Die weitere Durchführung der drei Ansätze mit den im folgenden genannten Einwaagen erfolgt wie in Beispiel 1 beschrieben, wobei die DL-Milchsäure aus Beispiel 1 jeweils durch die genannte Säure ersetzt wird.

*Beispiel 6* (Vergleichsbeispiel)

Ansatz:

A
- 112 g Adipinsäure-Hexandiol-Polyester (Molekulargewicht: 630)
- 8,75 g eines auf Butanol gestarteten Polypropylenoxidpolyethylenoxid-polyethers (Mol-Verh.: Propylenoxid:Ethylenoxid = 17:83; Molekulargewicht 2150)
- 0,17 g Trimethylolpropan

35,5 g Hexamethylendiisocyanat
48,2 g Isophorondiisocyanat
9,63 g Butandiol-1,4
700 ml Aceton
2,14 g Hydrazinhydrat
12,43 g N-Methyl-bis-(3-aminopropyl)-amin in 25 g Aceton
4,63 g DL-Milchsäure in 20 g Wasser
500 g entsalztes Wasser

Durchführung:

Vgl. Beispiel 1 (der konstante NCO-Wert stellt sich bei 5,02% ein)

Es entsteht eine feinteilige Dispersion mit einem Feststoffgehalt von 32,7% und einer Fordbecherviskosität (4 mm Düse) von 13,1 sek.

*Beispiel 7* (Vergleichsbeispiel)

Ansatz:

A
- 257 g Adipinsäure-Hexandiol-Polyester (Molekulargewicht: 1440)
- 8,75 g eines auf Butanol gestarteten Polypropylenoxid-Polyethylenoxid-polyethers (Mol-Verh.: Propylenoxid:Ethylenoxid = 19:83; Molekulargewicht: 2150)
- 0,17 g Trimethylolpropan

36,5 g Hexamethylendiisocyanat
48,2 g Isophorondiisocyanat
9,63 g Butandiol-1,4
900 ml Aceton
2,2 g Hydrazinhydrat
12,76 g N-Methyl-bis-(3-aminopropyl)-amin in 30 g Aceton
4,75 g DL-Milchsäure in 20 g Wasser
890 g entsalztes Wasser

Durchführung:

Vgl. Beispiel 1 (der konstante NCO-Wert stellt sich bei 3,1% ein)

Es entsteht eine feinteilige Dispersion mit einem Feststoffgehalt von 31% und einer Fordbecherviskosität (4 mm Düse) von 13 sek.

*Beispiel 8* (Vergleichsbeispiel)

Ansatz:

$$
A \left\{
\begin{array}{rll}
201 & \text{g} & \text{Adipinsäure-Hexandiol-Poly-} \\
 & & \text{ester (Molekulargewicht: 2250)} \\
8 & \text{g} & \text{eines auf Butanol gestarteten} \\
 & & \text{Polypropylenoxid-Polyethylen-} \\
 & & \text{oxid-polyethers (Mol-Verh.:} \\
 & & \text{Propylenoxid:Ethylenoxid} = \\
 & & \text{17:83; Molekulargewicht: 2150)} \\
0,1 & \text{g} & \text{Trimethylolpropan}
\end{array}
\right.
$$

|  |  |  |
|---|---|---|
| 18,6 | g | Hexamethylendiisocyanat |
| 24,6 | g | Isophorondiisocyanat |
| 4,8 | g | Butandiol-1,4 |
| 500 | ml | Aceton |
| 1,16 | g | Hydrazinhydrat |
| 6,75 | g | N-Methyl-bis-(3-aminopropyl)-amin in 25 g Aceton |
| 2,5 | g | DL-Milchsäure in 10 g Wasser |
| 615 | g | entsalztes Wasser |

Durchführung:

Vgl. Beispiel 1 (der konstante NCO-Wert stellt sich auf 2,3% ein)

Es entsteht eine feinteilige Dispersion mit einem Feststoffgehalt von 32% und einer Fordbecherviskosität (4 mm Düse) von 12,5 sek.

*Beispiel 9* (Vergleichsbeispiel)

Ansatz:

$$
A \left\{
\begin{array}{rll}
150 & \text{g} & \text{Adipinsäure-Hexandiol-Poly-} \\
 & & \text{ester (Molekulargewicht: 840)} \\
8,75 & \text{g} & \text{eines auf Butanol gestarteten} \\
 & & \text{Polypropylenoxid-Polyethylen-} \\
 & & \text{oxid-polyethers (Mol.Verh.:} \\
 & & \text{Propylenoxid:Ethylenoxid} = \\
 & & \text{17:83; Molekulargewicht: 2150)} \\
0,17 & \text{g} & \text{Trimethylolpropan}
\end{array}
\right.
$$

|  |  |  |
|---|---|---|
| 35,5 | g | Hexamethylendiisocyanat |
| 48,2 | g | Isophorondiisocyanat |
| 9,63 | g | Butandiol-1,4 |
| 700 | ml | Aceton |
| 4,37 | g | Hydrazinhydrat und |
| 21,1 | g | Ethylendiamino-2-ethansulfonsaures Natrium (45%ig in Wasser; AAS-Lösung) in |
| 100 | ml | entsalztes Wasser |
| 520 | ml | entsalztes Wasser |

Durchführung:

Die Durchführung erfolgt im wesentlichen entsprechend Beispiel 1. Es wird ein NCO-Präpolymer erhalten mit einem NCO-Wert von 4,6%, welches in Abwandlung zu Beispiel 1 mit Hydrazinhydrat und AAS-Lösung, zusammen in 100 ml Wasser, verlängert wird. Es entsteht eine feinteilige Dispersion mit einem Feststoffgehalt von 32% und einer Fordbecherviskosität (4 mm Düse) von 78 sek.

*Beispiel 10* (Vergleichsbeispiel)

Ansatz:

$$
A \left\{
\begin{array}{rll}
150 & \text{g} & \text{Adipinsäure-Hexandiol-Poly-} \\
 & & \text{ester (Molekulargewicht: 840)} \\
40 & \text{g} & \text{eines auf Butanol gestarteten} \\
 & & \text{Polypropylenoxid-Polyethylen-} \\
 & & \text{oxid-polyethers (Mol-Verh.:} \\
 & & \text{Propylenoxid:Ethylenoxid} = \\
 & & \text{17:83; Molekulargewicht: 2150)} \\
0,2 & \text{g} & \text{Trimethylolpropan}
\end{array}
\right.
$$

|  |  |  |
|---|---|---|
| 37,4 | g | Hexamethylendiisocyanat |
| 49,4 | g | Isophorondiisocyanat |
| 9,63 | g | Butandiol-1,4 |
| 700 | ml | Aceton |
| 7,0 | g | Hydrazinhydrat |
| 450 | g | entsalztes Wasser |

Durchführung:

Die Durchführung erfolgt im wesentlichen entsprechend Beispiel 1. Es wird ein NCO-Prepolymer erhalten mit einem NCO-Wert von 4,1%, welches in Abwandlung zu Beispiel 1 nur mit Hydrazinhydrat verlängert wird. Es entsteht eine feinteilige Dispersion mit einem Feststoffgehalt von 42% und einer Fordbecherviskosität (4 mm Düse) von 21,5 sek.

*Beispiel 11*

Ansatz:

$$
A \left\{
\begin{array}{rll}
178,5 & \text{g} & \text{eines difunktionellen OH-termi-} \\
 & & \text{nierten Poly-$\varepsilon$-caprolactons} \\
 & & \text{Molekulargewicht: 1000)} \\
8,75 & \text{g} & \text{eines auf Butanol gestarteten} \\
 & & \text{Polypropylenoxidpolyethylen-} \\
 & & \text{oxid-polyethers (Mol.Verh.:} \\
 & & \text{Propylenoxid:Ethylenoxid} = \\
 & & \text{17:83; Molekulargewicht: 2150)} \\
0,17 & \text{g} & \text{Trimethylolpropan}
\end{array}
\right.
$$

|  |  |  |
|---|---|---|
| 36,5 | g | Hexamethylendiisocyanat |
| 48,2 | g | Isophorondiisocyanat |
| 9,63 | g | Butandiol-1,4 |
| 1000 | ml | Aceton |
| 2,36 | g | Hydrazinhydrat |
| 13,71 | g | N-Methyl-bis-(3-aminopropyl)-amin und 25 g Aceton |
| 5,11 | g | DL-Milchsäure in 15 g Wasser |
| 440 | g | Wasser |

Durchführung:

Vgl. Beispiel 1 (der konstante NCO-Wert stellt sich bei 4,23% ein)

Es entsteht eine feinteilige Dispersion mit einem Feststoffgehalt von 41,36% und einer Viskosität von 37 sek. (Fordbecher, 4 mm Düse).

*Beispiel 12*

Ansatz:

A {
357    g   eines difunktionellen, OH-termi-
           nierten Poly-ε-caprolactons
           Molekulargewicht: 2000)
8,75   g   eines auf Butanol gestarteten
           Polypropylenoxid-polyethylen-
           oxid-polyethers (Mol.Verh.:
           Propylenoxid:Ethylenoxid =
           17:83; Molekulargewicht: 2150)
0,17   g   Trimethylolpropan
}
35,5   g   Hexamethylendiisocynat
48,2   g   Isophorondiisocyanat
9,6    g   Butandiol-1,4
1000   ml  Aceton
1,95   g   Hydrazinhydrat
11,28  g   N-Methyl-bis-(3-aminopropyl)-
           amin in 25 g Aceton
4,2    g   DL-Milchsäure in 15 g Wasser
1120   g   Wasser

Durchführung:

Vgl. Beispiel 1 (der konstante NCO-Wert stellt sich bei 2,93% ein)

Es entsteht eine feinteilige Dispersion mit einem Feststoffgehalt von 31,7% und einer Viskosität von 17,7 sek. (ford-Becher, 4 mm Düse).

*Beispiel 13*

Ansatz:

A {
268    g   eines difunktionellen, OH-termi-
           nierten Poly-ε-caprolactons
           (Molekulargewicht: 3000)
10     g   eines auf Butanol gestarteten
           Polypropylenoxidpolyethylen-
           oxid-polyethers (Mol.Verh.:
           Propylenoxid:Ethylenoxid =
           17:83; Molekulargewicht: 2150)
0,17   g   Trimethylolpropan
}
18,3   g   Hexamethylendiisocyanat
24,12  g   Isophorondiisocyanat
4,8    g   Butandiol-1,4
900    ml  Aceton
1,13   g   Hydrazinhydrat
6,55   g   N-Methyl-bis-(3-aminopropyl)-
           amin in 30 g Aceton
3,25   g   DL-Milchsäure in 15 ml Wasser
780    g   Wasser

Durchführung:

Vgl. Beispiel 1 (der konstante NCO-Wert stellt sich bei 1,75% ein)

Es entsteht eine feinteilige Dispersion mit einem Feststoffgehalt von 33% und einer Viskosität von 12 sek. (Ford-Becher, 4 mm Düse).

### TABELLE DER KLEBTECHNISCHEN PRÜFUNG AUF NORA-TESTGUMMI

| Beispiel | Polyester MG | Polylacton MG | Ionencharakter | Schälfestigkeit nach 7 Tagen in kg/cm (DIN 53 273) |
|---|---|---|---|---|
| 1 | 840 | — | kationisch | 7,0 Einriss |
| 2 | 840 | — | kationisch | 5,7 |
| 3 | 840 | — | kationisch | 5,2 |
| 4 | 840 | — | kationisch | 6,5 |
| 5a | 840 | — | kationisch | 7,4 Einriss |
| 5b | 840 | — | kationisch | 8,4 Einriss |
| 5c | 840 | — | kationisch | 7,8 Einriss |
| 6 | 630 | — | kationisch | 3,0 |
| 7 | 1440 | — | kationisch | 3,7 |
| 8 | 2250 | — | kationisch | 2,7 |
| 9 | 840 | — | anionisch | 0,8 |
| 10 | 840 | — | nicht ionisch | 3,0 |
| 11 | — | 1000 | kationisch | 8,6 |
| 12 | — | 2000 | kationisch | 6,1 |
| 13 | — | 3000 | kationisch | 2,8 |

**Patentansprüche**

Verwendung von wässrigen Lösungen oder Dispersionen von Polyisocyanat-Polyadditionsprodukten mit einem Gehalt von 2 bis 200 Milliäquivalenten pro 100 g Feststoff an chemisch eingebauten ternären oder quaternären Ammoniumgruppen, von 0 bis 25 Gew.-%, bezogen auf Feststoff, an eingebauten, innerhalb von end- und/oder seitenständig angeordneten Polyetherketten vorliegenden Ethylenoxideinheiten, die von 20 bis 95 Gew.-% an Polyestersegmenten Q in über Urethangruppen eingebauter Form aufweisen, wobei

Q für einen Rest steht, wie er durch Entfernung der Hydroxylgruppen aus

i) Dicarbonsäurepolyesterpolyolen des Molekulargewichtsbereichs 700 bis 1400

und/oder

ii) endständige Hydroxylgruppen aufweisenden Homo- oder Mischpolymerisaten des Molekulargewichtsbereichs 700 bis 2500 von Lactonen erhalten wird,

als Klebemittel oder zur Herstellung von Klebemitteln für beliebige Substrate.

2. Verwendung gemäss Anspruch 1 zum Verkleben von Gummi mit sich selbst oder anderen Materialien.

## Claims

1. Use of aqueous solutions or dispersions of polyisocyanate polyaddition products with a content of 2 to 200 milliequivalents per 100 g of solids of chemically incorporated ternary or quaternary ammonium groups and 0 to 25% by weight, based on solids, of incorporated ethylene oxide units present within terminally and/or laterally arranged polyether chains, which contain 20 to 95% by weight of polyester segments Q incorporated via urethane groups,

Q representing a radical of the type obtained by removing the hydroxyl groups from

i) dicarboxylic acid polyester polyols having a molecular weight in the range 700 to 1400 and/or

ii) homo- or copolymers of lactones containing terminal hydroxyl groups and having a molecular weight in the range 700 to 2500, as adhesives or for the production of adhesives for any desired substrates.

2. Use according to Claim 1 for bonding rubber to itself or other materials.

## Revendications

1. Utilisation de solutions ou dispersions aqueuses de produits de polyadditions de polyisocyanates, ayant, pour 100 g de matière sèche, une teneur de 2 à 200 milliéquivalents en des groupes ammonium ternaires ou quaternaires chimiquement incorporés, comportant de 0 à 25% en poids, sur la base de la matière solide, de motifs oxyde d'éthylène incorporés, présents dans des chaînes polyéthers à disposition terminale et/ou latérale, qui présentent de 20 à 95% en poids de segments polyesters Q sous forme incorporée à l'aide de groupes uréthannes, où

Q représente un reste tel qu'on l'obtient par enlèvement des groupes hydroxyles

i) de polyesters d'acides dicarboxyliques-polyols dont le poids moléculaire se situe dans l'intervalle allant de 700 à 1400,

et/ou

ii) d'homo- ou copolymères, dont le poids moléculaire se situe dans l'intervalle allant de 700 à 2500, de lactones présentant des groupes hydroxyles terminaux,

comme adhésifs ou pour la préparation d'adhésifs pour des substrates quelconques.

2. Utilisation selon la revendication 1 pour coller du caoutchouc sur lui-même ou sur d'autres matières.